# EUROPÄISCHE PATENTANMELDUNG

(11) **EP 0 790 545 A2**
(43) Veröffentlichungstag der Anmeldung: **20.08.1997**
(21) Anmeldenummer: 97102402.1
(22) Anmeldetag: 14.02.1997
(51) Int. Cl.: G05D 11/00, G01N 9/00

(54) **Verfahren und Einrichtung zur Messung bzw. Überwachung der Dichte von Flüssigkeiten**

(30) Priorität: 15.02.1996 DE 19605603
(71) Anmelder: DEUTZ Aktiengesellschaft, 51063 Köln (DE)
(72) Erfinder: Schürmann, Dieter, 45549 Sprockhövel (DE)

(57) **Zusammenfassung**

Um insbesondere für das Anwendungsgebiet Abfallrecycling, in dem undefinierte Produktströme im Schwimm-Sink-Scheideverfahren behandelt werden, ein Verfahren und eine Einrichtung zu schaffen, mit dem bzw. mit der die Dichte der jeweils eingesetzten Trennflüssigkeit einfach, schnell und vor allem genau gemessen werden kann und um damit eine zufriedenstellende Regelung bzw. Steuerung des Sortierprozesses zu ermöglichen, wird erfindungsgemäß vorgeschlagen, die zu messende Flüssigkeit mittels einer Pumpe (18) in einen Behälter (10) zu saugen, dort zu einer Flüssigkeitssäule vorbestimmter Höhe (H) aufzubauen und durch Unterdruckanlegung dabei zu entgasen, wonach die Flüssigkeitssäule dem Umgebungsdruck ausgesetzt wird und der der Flüssigkeitsdichte proportionale Bodendruck der Flüssigkeitssäule mittels einer Druckmeßdose (14) gemessen wird.

## Beschreibung

Die Erfindung betrifft ein Verfahren zur Messung bzw. Überwachung der Dichte von Flüssigkeiten, Lösungen und dergl. fluiden Medien, insbesondere von Trennflüssigkeiten in Anlagen zur Trennung von Feststoffgemischen, wobei die Dichte der Trennflüssigkeit so eingestellt wird, daß sie zwischen den Dichten der zu trennenden Feststoffe liegt. Außerdem betrifft die Erfindung eine Einrichtung zur Durchführung dieses Verfahrens.

Aus der Broschüre Nr. 13-403 d "Kunststoff-Recycling mit Ideen" der KHD Humboldt Wedag AG ist ein Verfahren zur Trennung von Kunststoffgemischen nach ihrer Dichte in einer Trennflüssigkeit bekannt, wobei die Flüssigkeitsdichte so gewählt ist, daß sie zwischen den Dichten der zu trennenden Feststoffe liegt, so daß ein Schwimmgut und ein Sinkgut erhalten wird. Dabei findet die Stofftrennung nach dem Schwimm-Sink-Trennverfahren nicht im Erdschwerefeld, sondern im Zentrifugalkraftfeld einer Zentrifuge statt. Je nach spezifischem Gewicht der zu trennenden Feststoffteilchen werden Trennflüssigkeiten verlangt, deren Dichten auch oberhalb von 1 g/cm³ liegen, wie z. B. Mischungen aus Wasser und Kochsalz, oder deren Dichten auch unterhalb von 1 g/cm³ liegen, wie z. B. Mischungen aus Wasser und Alkohol. Beim bekannten Verfahren zur Trennung von Kunststoffabfallgemischen der DE-C3 29 00 666 werden sogar vier verschiedene Trennflüssigkeiten bzw. vier verschiedene Trennflüssigkeitsdichten (kleiner 1,0, gleich 1,0, und größer 1,0) vorgeschlagen.

Es versteht sich, daß bei solchen Schwimm-Sink-Scheideverfahren die Dichte der jeweiligen Trennflüssigkeit eine entscheidende Rolle spielt. Ihr Wert muß über lange Zeit konstant gehalten werden. Dazu ist eine schnelle und ständige Überprüfung der Trennflüssigkeitsdichte auch während des Betriebes der Schwimm-Sink-Trennanlage erforderlich, so daß mit Hilfe der Messung eine Regulierung der Dichte auf einen bestimmten Wert erfolgen kann. Herkömmliche Methoden der Dichtemessung sind entweder nur im Labor durchzuführen und/oder dauern lange Zeit, wie beispielsweise wie die Pyknometrie. Andere Methoden, die online angewandt werden können, wie die Leitfähigkeitsmessung, funktionieren nur bei definierten Flüssigkeiten, und wieder andere Methoden, wie das Auswiegen bestimmter Volumina, sind zu ungenau oder benötigen einen sehr hohen Automatisierungsaufwand. Insbesondere unbekannte Salze bei Salzlösungen als Trennflüssigkeiten sowie in die Trennflüssigkeit eingetragene Luftbläschen können die Dichtemessung erheblich stören.

Der Erfindung liegt daher die Aufgabe zugrunde, besonders für das Anwendungsgebiet Abfallrecycling, in dem undefinierte Produktströme im Schwimm-Sink-Scheideverfahren behandelt werden, ein Verfahren und eine Einrichtung zu schaffen, mit dem bzw. mit der die Dichte der jeweils eingesetzten Trennflüssigkeit einfach, schnell und vor allem genau gemessen werden kann, besonders um eine zufriedenstellende Regelung bzw. Steuerung des Sortierprozesses zu ermöglichen.

Diese Aufgabe wird verfahrensmäßig mit den Maßnahmen des Kennzeichnungsteils des Anspruchs 1 und vorrichtungsmäßig mit den Maßnahmen des Kennzeichnungsteils des Anspruchs 2 gelöst. Vorteilhafte Ausgestaltungen der Erfindung sind in den Unteransprüchen angegeben.

Erfindungsgemäß wird die Flüssigkeit, deren Dichte zu messen bzw. zu überwachen ist, insbesondere die Trennflüssigkeit einer Schwimm-Sink-Aufbereitungsanlage wie z. B. Salzlösung, Alkohol/ Wassergemisch, oder auch Feststoff-Flüssigkeitssuspension, mittels einer Pumpe in einen Behälter gesaugt, bis sich im Behälter von unten nach oben eine Flüssigkeitssäule vorbestimmter Höhe bildet. Dabei wird die Flüssigkeitssäule durch Unterdruckanlegung gleichzeitig entgast. Sobald die Flüssigkeitssäule ihre vorbestimmte Höhe erreicht hat, wird durch Öffnung eines Ventiles oberhalb der Flüssigkeitssäule diese dem Umgebungsdruck ausgesetzt. Weil der Boden des die Flüssigkeitssäule beinhaltenden Behälters, z. B. vertikal angeordneten Rohrbehälters, eine Druckmeßdose aufweist, kann dann an dieser Druckmeßdose sofort der der Flüssigkeitsdichte proportionale Bodendruck der Flüssigkeitssäule gemessen werden. Die Messung des Bodendruckes einer vergleichsweise hohen Flüssigkeitssäule ist genauer als die Auswägung der Flüssigkeitssäule, um in herkömmlicher Weise die Flüssigkeitsdichte zu ermitteln. Außerdem liegt bei der erfindungsgemäßen Methode das genaue Meßergebnis nämlich die Dichte der zu messenden Flüssigkeit sehr schnell vor, und zwar nachdem diese in einfacher und schneller Weise entgast worden ist, so daß insoweit das Meßergebnis nicht verfälscht worden ist.

Die erfindungsgemäße Dichtemeßvorrichtung ist sehr einfach aufgebaut. Sie weist einen vertikal angeordneten oben und unten verschlossenen und am Boden eine Druckmeßdose aufweisenden Rohrbehälter auf, der im unteren Bereich über eine Saugleitung mit einem Vorratsbehälter und der im oberen Bereich über eine Saugleitung mit einer Pumpe verbunden ist, deren Druckseite mit dem Vorratsbehälter für die zu messende Flüssigkeit in Verbindung steht.

Die Druckmeßdose, die am Boden des Rohrbehälters angeordnet ist und die das der zu messenden Flüssigkeitsdichte proportionale Meßsignal liefert, kann über eine Signalleitung mit einem Regler zur Einstellung der jeweils gewünschten Dichte der zu überwachenden Flüssigkeit, insbesondere Trennflüssigkeit einer Schwimm-Sink-Trennanlage in Verbindung stehen.

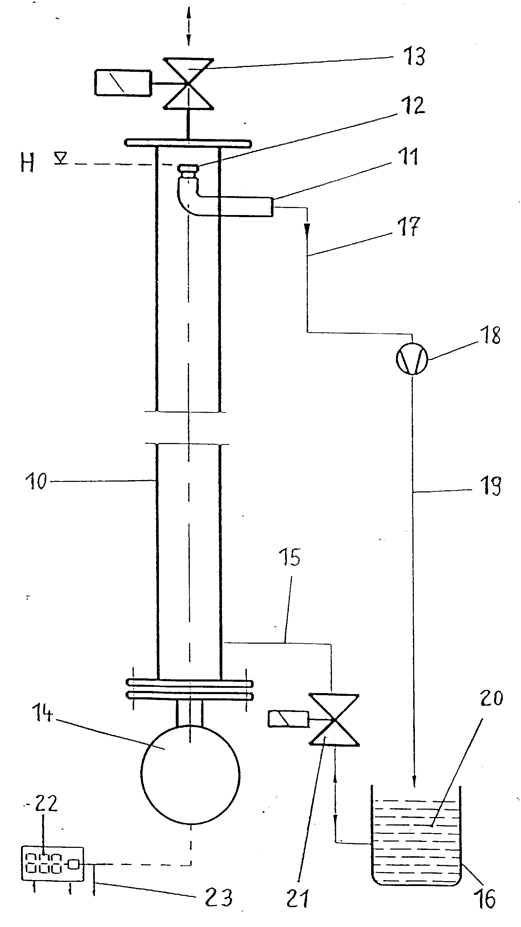

Die Erfindung und deren weitere Merkmale und Vorteile werden anhand des in der Zeichnung schematisch dargestellten Ausführungsbeispieles näher erläutert.

Die Zeichnung zeigt schematisch die erfindungsgemäße Einrichtung zur Messung bzw. Überwachung der Dichte von Flüssigkeiten, insbesondere der Trennflüssigkeit in einer Anlage zur Trennung von Feststoffgemischen wie Altkunststoffgemischen nach dem Verfahren der Schwimm-Sink-Scheidung in der jeweiligen dichtemäßig genau eingestellten Trennflüssigkeit im Erdschwerefeld oder im Zentrifugalkraftfeld der in der Beschreibungseinleitung erwähnten speziellen Schneckenzentrifuge. Entscheidend ist, daß die Dichte der Trennflüssigkeit so eingestellt wird, daß sie zwischen den Dichten der zu trennenden Feststoffe liegt. Zum Zwecke der Überwachung und Einstellung der Trennflüssigkeitsdichte muß diese vorher gemessen werden.

Dazu weist die erfindungsgemäße Einrichtung einen vertikal angeordneten oben und unten verschlossenen und mit Vorteil aus durchsichtigem Material bestehenden vakuumfesten Rohrbehälter (10) auf, in dem in einer Höhe (H) von beispielsweise etwa 2,00 m ein gekrümmtes dünneres Rohr (11) so eingebaut ist, daß sein eines Ende (12) nach oben zeigt, während das andere Ende seitlich aus dem Rohrbehälter (10) herausragt. Das Rohrende (12) weist mit Vorteil eine Gewindemuffe auf, mit deren Hilfe, d. h. durch deren Verdrehung die Höhe (H) einer im Rohrbehälter (10) aufzubauenden Flüssigkeitssäule exakt einstellbar ist. Am oberen Flansch des Rohrbehälters (10) befindet sich ein zweckmäßiger Weise magnetisch betätigbares Ventil (13).

Am bzw. im unteren Flansch des Rohrbehälters (10) ist eine Druckmeßdose (14) angebracht. Der untere Bereich des Rohrbehälters (10) ist über eine Saugleitung (15) mit einem Vorratsbehälter (16) und das Rohr (11) ist über eine Saugleitung (17) mit einer vorzugsweise reversierbaren Pumpe (18) verbunden, deren Druckseite über Leitung (19) mit dem Vorratsbehälter (16) für die zu messende Flüssigkeit (20), im Ausführungsbeispiel Trennflüssigkeit einer Schwimm-Sink-Trennanlage, in Verbindung steht. Die durch den Überlauf (12) abfließende Trennflüssigkeit wird mittels der Pumpe (18) über die Leitung (19) in den Vorratsbehälter (16) zurückgefördert. Auch in der Leitung (15) ist ein Ventil (21) angeordnet.

Die Arbeitsweise der erfindungsgemäßen Meßeinrichtung ist wie folgt:

Bevor die Pumpe (18) eingeschaltet wird, wird das Ventil (13) geschlossen und das Ventil (21) geöffnet. Nach Einschaltung der Pumpe (18) saugt diese die Flüssigkeit (20), deren Dichte zu messen ist, aus dem Vorratsbehälter (16) durch die Leitung (15) in den zunächst leeren Rohrbehälter (10). Dabei wird die Flüssigkeit gleichzeitig entgast. Wenn die Flüssigkeit durch das Rohr (11) überläuft und die im Rohrbehälter (10) gebildete Flüssigkeitssäule die Höhe (H) angenommen hat, wird das Ventil (21) geschlossen. Nach einiger Zeit wird dann das Ventil (13) geöffnet, um im Rohrbehälter (10) den Umgebungsdruck herzustellen. Dann wird an der Druckmeßdose (14) der Bodendruck der im Rohrbehälter (10) befindlichen Flüssigkeitssäule abgelesen, und dem gemessenen Bodendruck wird die entsprechende proportionale Flüssigkeitsdichte zugeordnet. Mit (22) ist eine Anzeigeeinrichtung zum Anzeigen der gemessenen Flüssigkeitsdichte beziffert. Nach der Messung wird das Ventil (21) geöffnet und der Rohrbehälter (10) wieder in den Vorratsbehälter (16) entleert. Das Entleeren des Rohrbehälters (10) kann ggf. durch Reversierung der Pumpe (18) bewerkstelligt bzw. erleichtert werden.

Die Druckmeßdose (14) kann über eine Signalleitung (23) mit einem Regler zur Einstellung der gewünschten Dichte der zu überwachenden Flüssigkeit (20) in Verbindung stehen, d. h. der schnell und genau ermittelte Dichtemeßwert kann für einen sofortigen Regeleingriff zur Einstellung der jeweils gewünschten Dichte der Trennflüssigkeit für die jeweils durchzuführende Schwimm-Sink-Trennaufgabe verwendet werden.

## Patentansprüche

1. Verfahren zur Messung bzw. Überwachung der Dichte von Flüssigkeiten, Lösungen und dergl. fluiden Medien, insbesondere von Trennflüssigkeiten in Anlagen zur Trennung von Feststoffgemischen, wobei die Dichte der Trennflüssigkeit so eingestellt wird, daß sie zwischen den Dichten der zu trennenden Feststoffe liegt, dadurch gekennzeichnet, daß die Flüssigkeit mittels einer Pumpe (18) in einen Behälter (10) gesaugt, dort zu einer Flüssigkeitssäule vorbestimmter Höhe (H) aufgebaut und durch Unterdruckanlegung dabei entgast wird, wonach die Flüssigkeitssäule dem Umgebungsdruck ausgesetzt wird und der der Flüssigkeitsdichte proportionale Bodendruck der Flüssigkeitssäule gemessen wird.

2. Einrichtung zur Durchführung des Verfahrens nach Anspruch 1, gekennzeichnet durch einen vertikal angeordneten oben und unten verschlossenen und am Boden eine Druckmeßdose (14) aufweisenden Rohrbehälter (10), der im unteren Bereich über eine Saugleitung (15) mit einem Vorratsbehälter (16) und der im oberen Bereich über eine Saugleitung (17) mit einer Pumpe (18) verbunden ist, deren Druckseite mit dem Vorratsbehälter (16) für die zu messende Flüssigkeit in Verbindung steht.

3. Einrichtung nach Anspruch 2, dadurch gekennzeichnet, daß in der unteren Saugleitung (15) ein Ventil (21) und daß am Behälter (10) oberhalb der zu bildenden Flüssigkeitssäule ein Belüftungsventil (13) angeordnet ist.

4. Einrichtung nach den Ansprüchen 2 oder 3, dadurch gekennzeichnet, daß die Pumpe (18) reversierbar ist.

5. Einrichtung nach Anspruch 1, dadurch gekennzeichnet, daß die Druckmeßdose (14) über eine Signalleitung (23) mit einem Regler zur Einstellung der gewünschten Dichte der zu überwachenden Flüssigkeit in Verbindung steht.
